# EUROPÄISCHE PATENTSCHRIFT

(11) **EP 1 532 575 B1**
(45) Veröffentlichungstag und Bekanntmachung des Hinweises auf die Patenterteilung: **09.07.2008**
(21) Anmeldenummer: 03793640.8
(22) Anmeldetag: 24.07.2003
(51) Int. Cl.: G06K 9/00, F25D 29/00

(54) **HAUSHALTSGERÄT MIT BIOMETRISCHER PERSONENIDENTIFIKATIONSEINRICHTUNG**
HOUSEHOLD APPLIANCE COMPRISING A BIOMETRIC PERSON-IDENTIFYING DEVICE
APPAREIL MENAGER A DISPOSITIF BIOMETRIQUE D'IDENTIFICATION DES PERSONNES

(30) Priorität: 13.08.2002 DE 10237132
(43) Veröffentlichungstag der Anmeldung: 25.05.2005
(73) Patentinhaber: BSH Bosch und Siemens Hausgeräte GmbH, 81739 München (DE)
(72) Erfinder: NEUMANN, Michael, 89073 Ulm (DE)
(86) Internationale Anmeldenummer: PCT/EP2003/008159
(87) Internationale Veröffentlichungsnummer: WO 2004/023381

(56) Entgegenhaltungen:
- WO-A-01/17406
- WO-A-02/068886
- DE-A- 10 062 466
- DE-A- 19 903 919
- US-A- 2 767 011
- US-A- 5 721 693

## Beschreibung

Die vorliegende Erfindung betrifft Haushaltsgeräte, die eine Gerätetür und eine Verriegelungseinrichtung für die Gerätetür besitzen. Insbesondere betrifft die vorliegende Erfindung Kühl- oder Gefrierschränke.

Für Kühlschränke sind einfache Verriegelungsmechanismen bekannt. Dies sind beispielsweise Riegel, die am Handgriff der Gerätetür integriert sind, sodass beim Schließen der Gerätetür mittels des Handgriffs der Riegel automatisch in eine entsprechende Ausnehmung am Kühlschrankgehäuse eingreift. Diese einfachen Verriegelungsmechanismen bringen jedoch den Nachteil mit sich, dass sie von jeder beliebigen Person bedienbar sind. Dies bedeutet, dass sich jede beliebige Person Zugang zu dem Kühlschrank verschaffen kann.

Insbesondere bei Gefrierschränken ebenfalls bekannte Verriegelungsmechanismen mit Schlössern und entsprechenden Schlüsseln stellen zwar sicher, dass sich nur berechtigte Personen Zugang verschaffen können. Diese Verriegelungsmechanismen sind jedoch aufwendig und wenig benutzerfreundlich, da der Benutzer stets einen Schlüssel zur Hand haben muss, um die Gerätetür öffnen zu können.

Der vorliegenden Erfindung liegt daher die Aufgabe zugrunde, ein Haushaltsgerät mit einer Gerätetür und einer Verriegelungseinrichtung für die Gerätetür bereitzustellen, das benutzerfreundlich bedienbar ist.

Die Aufgabe wird gelöst durch ein Haushaltsgerät nach Anspruch 1. Demnach wird ein Haushaltsgerät mit einer Gerätetür und einer Verriegelungseinrichtung für die Gerätetür bereitgestellt, wobei das Haushaltsgerät eine biometrische Personenidentifikationseinrichtung zur Ansteuerung der Verriegelungseinrichtung aufweist. Üblicherweise steuert die Personenidentifikationseinrichtung die Verriegelungseinrichtung zum Entriegeln der Gerätetür an. Dies bedeutet, dass ein Entriegeln der Gerätetür durch die Verriegelungseinrichtung nur erfolgt durch vorherige Identifikation des Benutzers als berechtigten Gerätebenutzer durch die Personenidentifikationseinrichtung.
Der Begriff biometrisch bedeutet im Rahmen der vorliegenden Erfindung, dass die Personenidentifikation auf der Erkennung eines nur dem Gerätebenutzer eigenen, körperlichen Merkmals beruht. Dies kann beispielsweise ein Fingerabdruck, die Sprache oder die Iris einer Person sein. Hierfür weist die biometrische Personenidentifikationseinrichtung entsprechende Einrichtungen auf, um die biometrischen Merkmale auf- bzw. abzunehmen. Dies können sein eine Fingerabdruckerfassungseinrichtung, eine Spracherfassungseinrichtung oder eine Iriserfassungseinrichtung. Die Personenidentifikationseinrichtung kann ein oder mehrere dieser Einrichtungen aufweisen. Vorzugweise sind diese Einrichtungen zur Erfassung eines biometrischen Merkmals an dem Haushaltsgerät in einer Höhe angeordnet, in der sich das biometrische Merkmal am bedienerfreundlichsten abnehmen lässt. Soll beispielsweise die Iris erfasst werden, dann ist die Iriserfassungseinrichtung vorzugsweise in Höhe der Augen des vor dem Gerät stehenden Benutzers angeordnet.

Die vorliegende Erfindung besitzt den Vorteil, dass ein Entriegeln und Öffnen der Gerätetür nur durch eine Person möglich ist, die von der biometrischen Personenidentifikationseinrichtung als zugangsberechtigt identifiziert wird. Nicht jede beliebige Person kann die Tür des Haushaltsgerätes entriegeln und öffnen. Insbesondere besteht der Vorteil der vorliegenden Erfindung darin, dass es sich um ein bedienerfreundliches System handelt. Der Benutzer führt sein personenspezifisches, körperliches bzw. biometrisches Merkmal stets mit sich, das von der Personenidentifikationseinrichtung des Haushaltsgerätes überprüft wird. Das Mitführen eines Schlüssels zum Entriegeln der Tür, wie bei einem mit einem Schloss verriegeltem Haushaltsgerät, entfällt.

Bei dem Haushaltsgerät kann es sich um einen Kühl- oder Gefrierschrank handeln. Die vorliegende Erfindung kann jedoch auch bei anderen Haushaltsgeräten mit einer Gerätetür Verwendung finden, beispielsweise bei Waschmaschinen, Wäschetrocknern, Wäscheschleudern und Spülmaschinen. Die vorliegende Erfindung ist auch a nwendbar für Haushaltsgeräte, die gewerblich eingesetzt werden, wie Waschmaschinen in Waschsalons.

Wie vorstehend bereits ausgeführt, steuert die Personenidentifikationseinrichtung die Verriegelungseinrichtung üblicherweise zum Entriegeln der Gerätetür an. Die Personenidentifikationseinrichtung kann die Verriegelungseinrichtung aber auch zum Verriegeln der Gerätetür ansteuern. Dies bedeutet, dass zunächst eine Identifikation der bedienenden Person durch die biometrische Personenidentifikationseinrichtunng erfolgt. Wird die bedienende Person als zugangsberechtigt festgestellt, steuert die Personenidentifikationseinrichtung die Verriegelungseinrichtung zum Verriegeln der Gerätetür an. Vorzugsweise ist die Verriegelungseinrichtung aber derart ausgestaltet, dass die Gerätetür beim Schließen automatisch verriegelt wird. Ein Verriegeln der Gerätetür erfolgt demnach ohne vorherige Personenidentifikation. Dies ist bedienerfreundlich.

Aus sicherheitstechnischen Gründen weist das Haushaltsgerät eine Sicherheitseinrichtung zum Entriegeln der Gerätetür aufweisen, wobei die Sicherheitseinrichtung ihrerseits einen Sensor zum Registrieren von Bewegungen im Inneren des Haushaltsgerätes aufweist. Vorzugsweise ist die Sicherheitseinrichtung derart gestaltet, sie im Bedarfsfall die im Haushaltsgerät bereits vorhandene Verriegelungseinrichtung zum Entriegeln der Gerätetür ansteuert. Die Sicherheitseinrichtung kommt dann zum Einsatz, wenn sich versehentlich ein Kind oder ein Haustier im Inneren des verriegelten Haushaltsgerätes befinden. Der Sensor nimmt Bewegungen der Person oder des Tieres in Form von Druck auf die Türe auf. Die Sicherheitseinrichtung entriegelt daraufhin sofort die Tür. Das Kind kann diese dann öffnen. Vorzugsweise wird die Tür mithilfe der Sicherheitseinrichtung nicht nur entriegelt, sondern auch geöffnet. Dies kommt dann zum Tragen, wenn die eingeschlossene Person aufgrund von Panik nicht mehr fähig ist, die Tür selbst zu öffnen, oder generell, wenn es sich um ein eingeschlossenes Tier handelt. Im Rahmen der vorliegenden Erfindung handelt es sich bei dem Drucksensor vorzugsweise um einen Dehnungsmessstreifen, der angeordnet ist, um eine Verformung der Haushaltsgeräteinnenwand zu registrieren. Denn es ist üblicherweise davon auszugehen, dass eine eingeschlossene Person an die Geräteinnenwand schlagen wird, etwa um sich bemerkbar zu machen, oder zu versuchen, die Gerätetür von innen zu öffnen. Hierdurch wird die Geräteinnenwand vorübergehend verformt, was der Dehnungsmessstreifen registriert. Der Dehnungsmessstreifen befindet sich besonders bevorzugt an der Innenwand der Gerätetür. Es können vorteilhafterweise auch mehrere Dehnungsmessstreifen zum Einsatz kommen. Diese können sich entweder vertikal und/oder horizontal über die gesamte Länge der Innenwand der Gerätetür erstrecken oder kreuzweise und geneigt angeordnet sein.

Im Rahmen der vorliegenden Erfindung ist die Verriegelungseinrichtung vorzugsweise derart ausgestaltet, dass die Gerätetür im spannungslosen Zustand verriegelt bleibt. Hiermit wird sicher gestellt, dass sich eine unberechtigte Person nicht durch einfaches Ausstecken des Netzsteckers Zugang zu dem Haushaltsgerät verschaffen kann. Die Gerätetür bleibt verriegelt.

Vorzugsweise weist das Haushaltsgerät eine Pufferstromversorgungseinrichtung auf. Die Pufferstromversorgung kann beispielsweise mithilfe eines Akkumulators erfolgen. Die Pufferstromversorgungseinrichtung stellt sicher, dass das Haushaltsgerät trotz beispielsweise eines Netzstromausfalles mit Strom versorgt wird. Vorzugsweise versorgt die Pufferstromversorgungseinrichtung die Verriegelungseinrichtung und die Personenidentifikationseinrichtung. Damit wird erreicht, dass ein Entriegeln bzw. Verriegeln der Haushaltsgerätetür auch bei einem Stromausfall möglich bleibt. Eine besonders bevorzugte Ausführungsform der vorliegenden Erfindung sieht vor, dass die Pufferstromversorgungseinrichtung die Sicherheitseinrichtung versorgt. Dies stellt sicher, dass ein Entriegeln der Türe stets erfolgt, wenn sich versehentlich eine Person oder ein Tier in dem verriegelten Haushaltsgerät befinden.

Weitere Ausgestaltungen und Vorteile der vorliegenden Erfindung werden im Folgenden anhand einer Ausführungsform der vorliegenden Erfindung erläutert. Dabei zeigt:
- Fig. 1: eine perspektivische Ansicht eines Kühlgerätes 1 gemäß der vorliegenden Erfindung
- Fig. 2: ein Blockdiagramm mit Einrichtungen des Kühlgerätes 1 nach Fig. 1

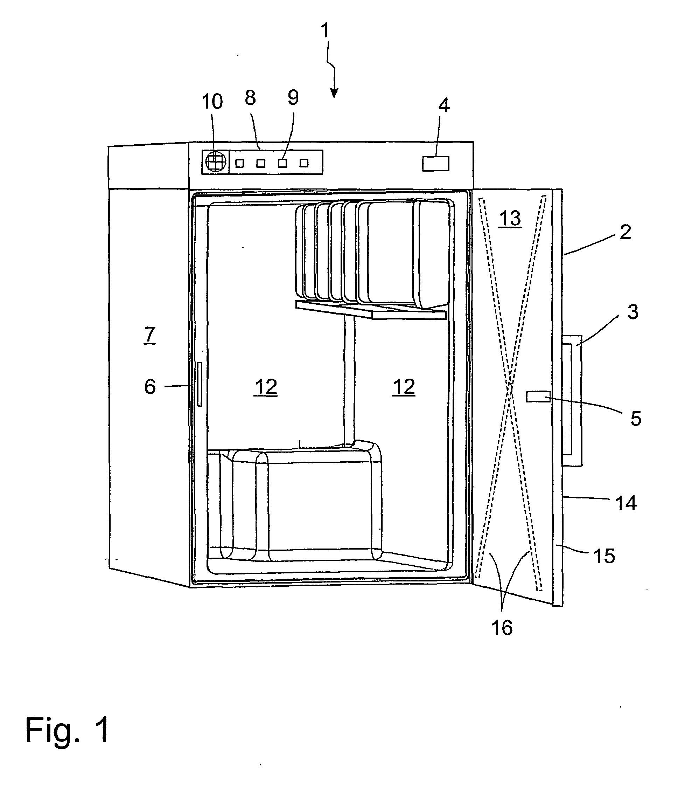

Fig. 1 zeigt ein Kühlgerät 1 mit einer Gerätetür 2, die im dargestellten Zustand geöffnet ist. Die Gerätetür 2 umfasst einen Türgriff 3. Eine Temperaturanzeige 4 am Kühlgerät 1 gibt die aktuelle Temperatur im Innenraum des Kühlgerätes wieder. Das Kühlgerät 1 weist des weiteren einen Riegel 5 an der Gerätetür 2 und einen Riegeleingriff 6 am Gehäuse 7 des Kühlgerätes 1 auf. An der Vorderfront des Kühlgerätes 1, oberhalb der Gerätetür 2, ist eine Bedienleiste 8 mit Tasten 9 angeordnet. Links neben der Bedienleiste 8 befindet sich ein Mikrofon 10. Das Haushaltsgerät 1 umfasst einen Innenraum 11 umgrenzende Geräteinnenwände 12. Darunter befindet sich auch eine Gerätetürinnenwand 13 der Gerätetür 2. Die Gerätetür 2 umfasst des weiteren eine Geräteaußenwand 14. Zwischen der Gerätetürinnenwand 13 und der Gerätetüraußenwand 14 befindet sich ein Innenraum 15. In diesem Innenraum 15 sind an der Gerätetürinnenwand 13 zwei Dehnungsmessstreifen 16 kreuzweise versetzt angeordnet. Die Dehnungsmessstreifen 16 sind gestrichelt dargestellt.

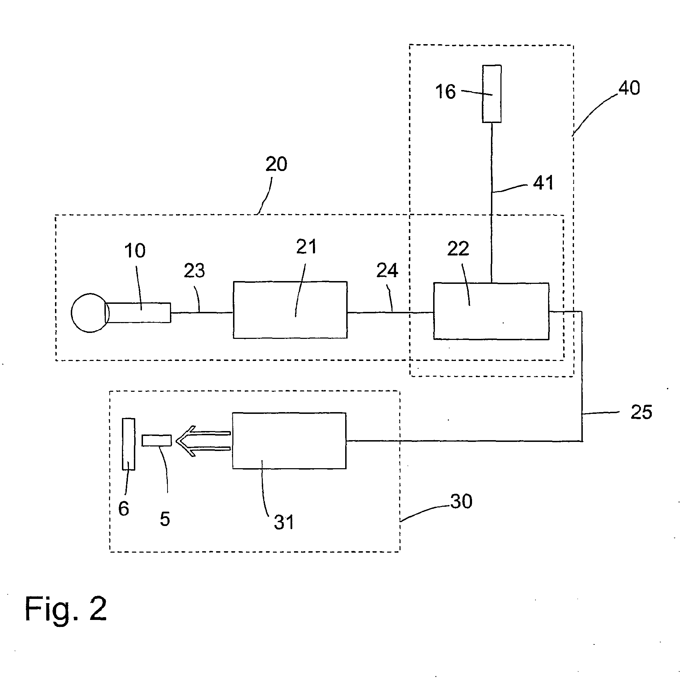

Fig. 2 zeigt ein Blockdiagramm mit Einrichtungen des Kühlgerätes 1. Es handelt sich hierbei im wesentlichen um ein Black-Box-Schema, anhand dessen die weiteren Einrichtungen des Kühlgerätes 1 und deren Funktionsweise erläutert werden. Das Kühlgerät 1 umfasst demnach des weiteren eine biometrische Personenidentifikationseinrichtung 20 mit dem bereits in Fig. 1 dargestellten Mikrofon 10 als Spracherfassungsseinrichtung, einem Analog/Digital-Wandler 21 und einem Mikroprozessor 22, die miteinander über Leitungen 23 und 24 in Verbindung stehen. Des weiteren besitzt das Kühlgerät 1 eine Verriegelungseinrichtung 30 mit einem Stellglied 31, beispielsweise einer Spule 31, und dem bereits in Fig. 1 gezeigten Riegel 5 und Riegeleingriff 6. Der Mikroprozessor 22 der Personenidentifikationseinrichtung 20 steht mit dem Stellglied 31 der Verriegelungseinrichtung 30 über Leitung 25 in Verbindung. Das Kühlgerät 1 weist des weiteren eine Sicherheitseinrichtung 40 auf, welche den Mikroprozessor 22 der Personenidentifikationseinrichtung 20 und den bereits in Fig. 1 gezeigten Dehnungsmessstreifen 16 umfasst, die über die Leitung 41 miteinander in Verbindung stehen.

Im Folgenden wird nun die Funktionsweise der vorliegenden Erfindung anhand der Fig. 1 und 2 näher erläutert.

In Fig. 1 ist die Gerätetür 2 des Kühlgerätes 1 geöffnet und unverriegelt. Schließt der Gerätebenutzer die Gerätetür 2 des Kühlgerätes 1 mittels des Türgriffs 3, so wird die Gerätetür durch die Verriegelungseinrichtung 30 automatisch verriegelt, indem der Riegel 5 in den Riegeleingriff 6 eingreift. Ein Öffnen der Gerätetür 2 durch den Benutzer mittels des Türgriffs 3 ist dann ohne weiteres nicht mehr möglich.

Möchte der Gerätebenutzer die Gerätetür 2 öffnen, so muss diese erst entriegelt werden. Ein Entriegeln der Gerätetür 2 erfolgt mittels der biometrischen Personenidentifikationseinrichtung 20 und der Verriegelungseinrichtung 30, was nachfolgend näher erläutert wird. Das Mikrofon 10 nimmt die Sprache des Benutzers auf. Die daraus resultierenden analogen Signale werden über die Leitung 23 dem Analog/Digital-Wandler 21 zugeführt, der die analogen Sprachsignale in digitale Sprachsignale umwandelt. Diese werden dann über die Leitung 24 dem Mikroprozessor 22 zugeführt, in welchem die Sprachsignale mit dort bereits von berechtigten Personen gespeicherten Sprachsignalen verglichen werden. Stimmen festgelegte Parameter der aktuell aufgenommenen Sprachsignale mit denen der gespeicherten Sprachsignale überein, steuert der Mikroprozessor über die Leitung 25 die Spule 31 der Verriegelungseinrichtung 30 an, welche dann den Riegel 5 bewegt, sodass dieser nicht mehr in der Riegeleingriff 6 eingreift, und somit die Gerätetür 2 entriegelt wird. Die Gerätetür 2 kann dann von dem als berechtigt erkannten Benutzer geöffnet werden. Stimmen die aktuell aufgenommenen Sprachsignale mit den gespeicherten Sprachsignalen nicht überein, dann steuert der Mikroprozessor 22 die Verriegelungseinrichtung 30 nicht an. Die Gerätetür 2 bleibt verriegelt. Die als nicht berechtigt erkannte Person kann die Gerätetür 2 nicht öffnen. Die vorherige Speicherung der Sprachsignale der berechtigten Personen in dem Mikroprozessor 22 erfolgt ebenfalls über das Mikrofon 10 und den Analog/Digital-Wandler 21. Damit diese Speicherung von berechtigenden Sprachsignalen nicht von jeder beliebigen Person vorgenommen werden kann, muss beispielsweise ein vom Gerätehersteller festgelegter Zahlencode über die Bedienleiste 8 mittels der Tasten 9 eingegeben werden.

Statt des Mikrofons 10 kann das Kühlgerät auch eine Kamera 10 zur Erfassung der Iris oder des Fingerabdruckes des Benutzers als alternative biometrische Merkmale besitzen. Alternativ zum automatischen Verriegeln der Gerätetür 2 bei deren Schließen kann auch vorgesehen sein, dass das Verriegeln der Gerätetür 2 nur durch vorherige Personenidentifikation mittels der biometrischen Personenidentifikationseinrichtung 20 möglich ist. In diesem Fall würde dann der Mikroprozessor 22, nachdem eine Berechtigung festgestellt wurde, die Verriegelungseinsrichtung 30 zum Verriegeln der Gerätetür 2 ansteuern. Wenn ein unberechtigter Benutzer die Tür 2 schließt, oder wenn der Berechtigte Benutzer die Tür schließt, ohne seine Berechtigung überprüfen zu lassen, bleibt die Tür unverriegelt. Dies ist zweckmäßig, wenn der berechtigte Benutzer anderen den Zugriff auf das Kühlgerät 1 gestatten will, oder wenn er mehrmals kurz nacheinander auf das Kühlgerät zugreifen und dabei nicht jedes Mal seine Berechtigung überprüfen lassen will.

Die Sicherheitseinrichtung 40 dient zum Entriegeln der Gerätetür 2 im Notfall. Ein solcher Notfall ist gegeben, wenn eine Person oder ein Tier versehentlich in dem Haushaltsgerät eingeschlossen ist. Die Gerätetür 2 ist geschlossen und verriegelt, und daher vom Inneren des Haushaltsgerätes 1 nicht mehr zu öffnen. Schlägt eine versehentlich eingeschlossene Person gegen die Gerätetürinnenwand 13, so wird einer der beiden oder beide Dehnungsmessstreifen 16 gedehnt. Die Signale der Dehnungsmessstreifen 16 werden an den Mikroprozessor 22 über die Leitung 41 weitergegeben. Der Mikroprozessor 22 steuert dann die Verriegelungseinrichtung 30 beziehungsweise die Spule 31 an, die den Riegel 5 aus dem Riegeleingriff 6 bewegt, wodurch die Gerätetür 2 entriegelt wird. Die Gerätetür kann dann vom Inneren des Haushaltsgerätes 1 aus von der eingeschlossenen Person geöffnet werden.

Eine (in Fig. 2 nicht dargestellte) Notstromversorgung, z. B. in Form eines kleinen Akkumulators, der bei normalem Netzbetrieb des Kühlgeräts aufgeladen wird, kann vorgesehen werden, um im Falle eines Ausfalls der Netzspannung die Personenidentifikationseinrichtung 20 und die Sicherheitseinrichtung 40 zumindest eine Zeitlang in Betrieb zu halten. So kann bei einem Stromausfall der berechtigte Benutzer die Gerätetür 2 weiterhin entriegeln und auf in dem Kühlgerät gelagertes Kühlgut zugreifen. Auch für die Sicherheitseinrichtung 40 ist es wichtig, dass sie bei Stromausfall weiter funktioniert.

## Patentansprüche

1. Haushaltsgerät (1), insbesondere Kühl- oder Gefrierschrank, mit einem Innenraum, mit einer Gerätetür (2) und einer Verriegelungseinrichtung (30) für die Gerätetür (2), und einer biometrischen Personenidentifikationseinrichtung (20) zur Ansteuerung der Verriegelungseinrichtung (30), **dadurch gekennzeichnet, dass** das Haushaltsgerät (1) eine Sicherheitseinrichtung (40) aufweist zum Entriegeln der Gerätetür (2), die einen Sensor (16) zum Registrieren von Bewegungen im Inneren des Haushaltsgerätes (1) aufweist, wobei der Sensor (16) eingerichtet ist, eine Verformung der Geräteinnenwand (12,13) zu registrieren.

2. Haushaltsgerät (1) nach Anspruch 1, **dadurch gekennzeichnet, dass** die Personenidentifikationseinrichtung (20) die Verriegelungseinrichtung (30) zum Entriegeln der Gerätetür (2) ansteuert.

3. Haushaltsgerät (1) nach Anspruch 1 oder 2, **dadurch gekennzeichnet, dass** die Personenidentifikationseinrichtung (20) die Verriegelungseinrichtung (30) zum Verriegeln der Gerätetür (2) ansteuert.

4. Haushaltsgerät (1) nach Anspruch 1 oder 2, **dadurch gekennzeichnet, dass** die Verriegelungseinrichtung (30) derart ausgestaltet ist, dass die Gerätetür (2) beim Schließen automatisch verriegelt wird.

5. Haushaltsgerät (1) nach einem der vorangehenden Ansprüche, **dadurch gekennzeichnet, dass** die Personenidentifikationseinrichtung (20) eine Fingerabdruckerfassungseinrichtung aufweist.

6. Haushaltsgerät (1) nach einem Ansprüche 1 bis4, **dadurch gekennzeichnet, dass** die Personenidentifikationseinrichtung eine Spracherfassungseinrichtung(10) aufweist.

7. Haushaltsgerät (1) nach einem der Ansprüche 1 bis 4, **dadurch gekennzeichnet, dass** die Personenidentifikationseinrichtung eine Iriserfassungseinrichtung aufweist.

8. Haushaltsgerät (1) nach einem der vorhergehenden Ansprüche, **dadurch gekennzeichnet, dass** der Sensor (16) als Drucksensor (16) ausgebildet ist.

9. Haushaltsgerät (1) nach einem der Ansprüche 1 bis 7, **dadurch gekennzeichnet, dass** der Sensor (16) als Dehnungsmessstreifen (16) ausgebildet ist.

10. Haushaltsgerät (1) nach Anspruch 9, **dadurch gekennzeichnet, dass** wenigstens ein Dehnungsmessstreifen (16) an der Innenwand der Gerätetür (2) angeordnet ist.

11. Haushaltsgerät (1) nach einem der vorangehenden Ansprüche, **dadurch gekennzeichnet, dass** die Verriegelungseinrichtung (30) derart ausgestaltet ist, dass die Gerätetür (2) im spannungslosen Zustand verriegelt bleibt.

12. Haushaltsgerät (1) nach einem der vorangehenden Ansprüche, **dadurch gekennzeichnet, dass** das Haushaltsgerät (1) eine Pufferstromversorgungseinrichtung aufweist.

13. Haushaltsgerät (1) nach Anspruch 12, **dadurch gekennzeichnet, dass** die Pufferstromversorgungseinrichtung die Verriegelungsseinrichtung (30) und die Personenidentifikationseinrichtung (20) versorgt.

14. Haushaltsgerät (1) nach Anspruch 12 oder 13, **dadurch gekennzeichnet, dass** die Pufferstromversorgungseinrichtung die Sicherheitseinrichtung (40) versorgt.

## Claims

1. Domestic appliance (1), particularly refrigerator or freezer, with an interior space, with an appliance door (2) and a locking device (30) for the appliance door (2), and a biometric person identification device (20) for control of the locking device (30), **characterised in that** the domestic appliance (1) comprises a safety device (40) for unlocking the appliance door (2), which comprises a sensor (16) for registration of movements in the interior of the domestic appliance (1), wherein the sensor (16) is equipped for registering a deformation of the appliance interior wall (12, 13).

2. Domestic appliance (1) according to claim 1, **characterised in that** the person identification device (20) controls the locking device (30) for unlocking the appliance door (2).

3. Domestic appliance (1) according to claim 1 or 2, **characterised in that** the person identification device (20) controls the locking device (30) for locking the appliance door (2).

4. Domestic appliance (1) according to claim 1 or 2, **characterised in that** the locking device (30) is constructed in such a manner that the appliance door (2) when closed is automatically locked.

5. Domestic appliance (1) according to any one of the preceding claims, **characterised in that** the person identification device (20) comprises a fingerprint detection device.

6. Domestic appliance (1) according to any one of claims 1 to 4, **characterised in that** the person identification device comprises a speech detecting device (10).

7. Domestic appliance (1) according to any one of claims 1 to 4, **characterised in that** the person identification device comprises an iris detection device.

8. Domestic appliance (1) according to any one of the preceding claims, **characterised in that** the sensor (16) is constructed as a pressure sensor (16).

9. Domestic appliance (1) according to any one of claims 1 to 7, **characterised in that** the sensor (16) is constructed as a strain gauge (16).

10. Domestic appliance (1) according to claim 9, **characterised in that** at least one strain gauge (16) is arranged at the inner wall of the appliance door (2).

11. Domestic appliance (1) according to any one of the preceding claims, **characterised in that** the locking device (30) is constructed in such a manner that the appliance door (2) remains locked in the voltage-free state.

12. Domestic appliance (1) according to any one of the preceding claims, **characterised in that** the domestic appliance (1) has a buffer current supply device.

13. Domestic appliance (1) according to claim 12, **characterised in that** the buffer current supply device supplies the locking device (30) and the person identification device (20).

14. Domestic appliance (1) according to claim 12 or 13, **characterised in that** the buffer current supply device supplies the safety device (40).

## Revendications

1. Appareil ménager (1), en particulier réfrigérateur ou congélateur, comprenant un espace intérieur, une porte d'appareil (2) et un dispositif de verrouillage (30) pour la porte d'appareil (2), et un dispositif biométrique d'identification de personnes (20) pour l'activation du dispositif de verrouillage (30), **caractérisé en ce que** l'appareil ménager (1) présente un dispositif de sécurité (40) pour le déverrouillage de la porte d'appareil (2), qui présente un capteur (16) pour l'enregistrement des mouvements à l'intérieur de l'appareil ménager (1), le capteur (16) étant aménagé pour enregistrer une déformation de la paroi intérieure de l'appareil (12, 13).

2. Appareil ménager (1) selon la revendication 1, **caractérisé en ce que** le dispositif d'identification de personnes (20) commande le dispositif de verrouillage (30) pour le déverrouillage de la porte d'appareil (2).

3. Appareil ménager (1) selon la revendication 1 ou 2, **caractérisé en ce que** le dispositif d'identification de personnes (20) commande le dispositif de verrouillage (30) pour le verrouillage de la porte d'appareil (2).

4. Appareil ménager (1) selon la revendication 1 ou 2, **caractérisé en ce que** le dispositif de verrouillage (30) est conçu de telle sorte que la porte d'appareil (2) est verrouillée automatiquement lors de la fermeture.

5. Appareil ménager (1) selon l'une quelconque des revendications précédentes, **caractérisé en ce que** le dispositif d'identification de personnes (20) présente un dispositif d'identification par empreinte digitale.

6. Appareil ménager (1) selon l'une quelconque des revendications 1 à 4, **caractérisé en ce que** le dispositif d'identification de personnes présente un dispositif de détection par la voix (10).

7. Appareil ménager (1) selon l'une quelconque des revendications 1 à 4, **caractérisé en ce que** le dispositif d'identification de personnes présente un dispositif de détection par l'iris.

8. Appareil ménager (1) selon l'une quelconque des revendications précédentes, **caractérisé en ce que** le capteur (16) est conçu comme capteur de pression (16).

9. Appareil ménager (1) selon l'une quelconque des revendications 1 à 7, **caractérisé en ce que** le capteur (16) est conçu comme jauge de contrainte (16).

10. Appareil ménager (1) selon la revendication 9, **caractérisé en ce qu'**au moins une jauge de contrainte (16) est disposée sur la paroi intérieure de la porte d'appareil (2).

11. Appareil ménager (1) selon l'une quelconque des revendications précédentes, **caractérisé en ce que** le dispositif de verrouillage (30) est conçu de telle sorte que la porte de l'appareil (2) reste verrouillée dans l'état hors tension.

12. Appareil ménager (1) selon l'une quelconque des revendications précédentes, **caractérisé en ce que** l'appareil ménager (1) présente un dispositif d'alimentation en courant tampon.

13. Appareil ménager (1) selon la revendication 12, **caractérisé en ce que** le dispositif d'alimentation en courant tampon alimente le dispositif de verrouillage (30) et le dispositif d'identification de personnes (20).

14. Appareil ménager (1) selon la revendication 12 ou 13, **caractérisé en ce que** le dispositif d'alimentation en courant tampon alimente le dispositif de sécurité (40).
